# EUROPEAN PATENT SPECIFICATION

(11) **EP 0 364 415 B1**
(45) Date of publication and mention of the grant of the patent: **13.04.1994**
(21) Application number: 89830432.4
(22) Date of filing: 06.10.1989
(51) Int. Cl.: C03B 23/03, C03B 35/18

(54) **Improved process and apparatus for the bending of flat sheets of glass**
Verfahren und Vorrichtung zum Biegen von Flachglastafeln
Procédé et appareil pour le bombage de feuilles de verre plates

(30) Priority: 11.10.1988 IT 4844288
(43) Date of publication of application: 18.04.1990
(73) Proprietor: SOCIETA' ITALIANA VETRO - SIV - S.p.A., 66050 San Salvo (CH) (IT)
(72) Inventor: Sassanelli, Vitantonio, I-66054 Vasto CH (IT); Pracilio, Francesco, I-66054 Vasto CH (IT)
(74) Representative: Bazzichelli, Alfredo

(56) References cited:
- WO-A-85/02392
- US-A- 3 978 974
- US-A- 4 043 783

## Description

The present invention relates to an improved process and apparatus for the bending of sheets of glass.

Such products are commonly used as glazing for motor vehicles in general, and in particular for automobiles. This kind of use requires that the sheets of glass be manufactured respecting precisely both the prescribed dimensions and tolerances and the configuration required by the body of the automobile. It is furthermore necessary that the visibility through said sheets of glass is not obstructed by optical distortions or defects found in the glazing.

Tempering treatment using heat then increases the resistance of the sheets of glass to impact, and guarantees that the fragments of glass produced in the case of breakage be less dangerous than those which would be produced in non tempered glass.

As is known, sheets of tempered glass, in particular those used by the automobile industry, can also be produced in plants with an horizontal line of travel, which permit a high production throughput.

In said plants, each sheet is transported horizontally through a tunnel oven, in which it is heated up to deformation temperature, and is then transferred to a bending station, where the sheet is shaped, and then reaches a tempering station and successively a cooling station.

With reference to the bending station, a bending method is known which uses the force of gravity and the pressure of a mould in order to obtain the shaping of the sheet of glass in the most exact manner possible.

In particular the pressure-bending of the heated sheets takes place between male and female moulding plates having complementary shaping surfaces.

The sheets of glass are horizontally supported by a female plate, hereinafter called "ring", the bearing surface of which is divided into segments to allow the passage of the ring itself upwards through a plurality of conveyor rollers.

Descriptions of this prior art can be found in US patent No. 3338695 (Ritter), in French patent No. 1474251 (LOF), in US patent No. 3684493 (Ritter) and in Luxemburg patent No. 65146 (Ritter). The method used to bend the sheets of glass according to the above mentioned patents consists essentially in the fact that the sheet itself, after having been heated in an oven up to the softening temperature, arrives, by means of horizontal conveyor rollers, in register with the shaping ring, which, passing beyond the conveyor rollers, lifts up the sheet and carries it towards the upper mould whereby the final shaping takes place. Subsequently the ring is lowered, passing back through the conveyor rollers, and leaving the curved sheet of glass on the same horizontal rollers. The conveyor rollers then carry the sheet of glass towards the tempering station.

During the past years great commercial importance has been given to the production of curved and tempered sheets of glass with more and more reduced thicknesses (going from values of between 5 and 6 mm in thickness to values of between 2,5 and 4 mm in thickness), with ever greater dimensions, due to the increase in the glazed surfaces in automobiles, and having complex curvatures, in particular spherical ones.

In practice the sheets of glass have become thinner, larger and preferably spherical. The above described shaping technology is no longer suitable for the production of sheets of glass according to market requirements.

In addition to this a further difficulty for production is constituted by the market trend to request sheets of glass which are radiused to the bodywork, said sheets thus presenting wings which are sharply curved towards the interior of the vehicle.

The prior art is not suitable for providing this kind of product with commercially acceptable costs, as it is not capable of an efficient control of the curvature of the glass which, being of a thickness ranging from 2,5 to 4 mm, tends to increase more than necessary its concavity towards the bottom, due to the effect of the force of gravity: furthermore, it is not capable of arriving at the precise shape of the sheet itself, especially when the latter has sharply upward-turned wings, because when said sheet is laid down on the conveyor rollers it tends to loose the shape which has been given to it, as it is still in a plastic state.

Document WO-A-85/02392 describes an apparatus for producing curved tempered sheets of glass in which adjacent rollers are inclined in opposite directions to form a saddle for supporting the curved glass in the tempering section of the apparatus. In this apparatus the inclination of the rollers is fixed during the operation for each shape of the sheet of glass. In the forming section of the apparatus the transfer of the sheet of glass is effected by a plurality of endless belts in a fixed position with respect to the apparatus.

The object of the present invention is that of overcoming the above mentioned problems, providing an improved process and apparatus for the bending of sheets of glass which permits the bending into complex forms of sheets of glass having reduced thickness and large dimensions.

This object is performed by sliding, in the vertical direction, one side of the horizontal conveyor rollers situated in the area between the ring and the male bending mould.

Hereby the inclination of each roller occurs in a direction opposite to that of the adjacent roller, so that the final result is a series of rollers crossing each other downwards, forming a very wide obtuse angle, with its apex towards the center of the rollers themselves, and crossing the bearing plane of the bending ring.

Following the pressure bending it is possible for the cradle formed by the crossed rollers to receive the sheet of glass, thus preventing it from losing its predetermined shape.

Consequently, the invention provides an apparatus according to claim 1 and a process according to claim 3. The invention is described in greater detail herebelow with reference to the drawings, which represent an embodiment thereof:

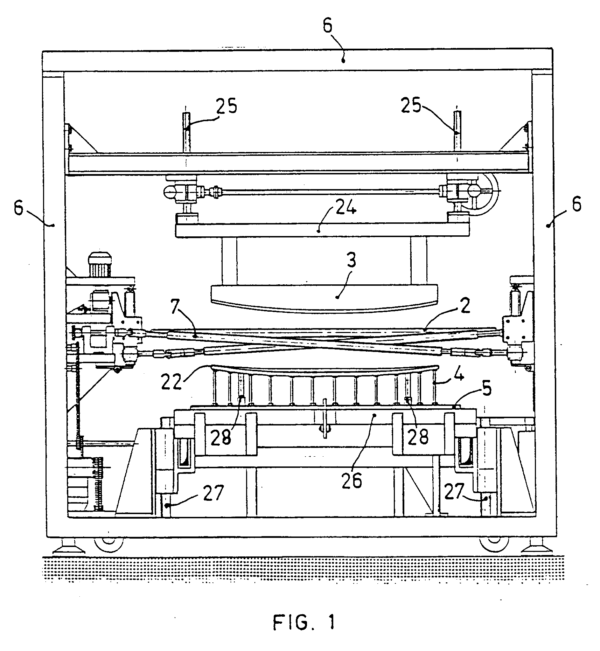

figure 1 is a front view of the apparatus according to the invention;

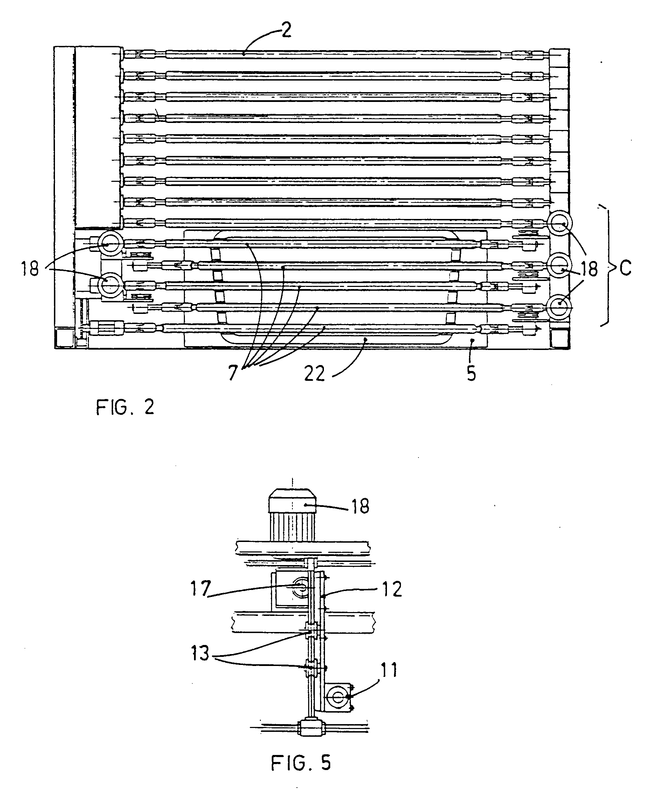

figure 2 is a top view of the bending station according to the present invention;

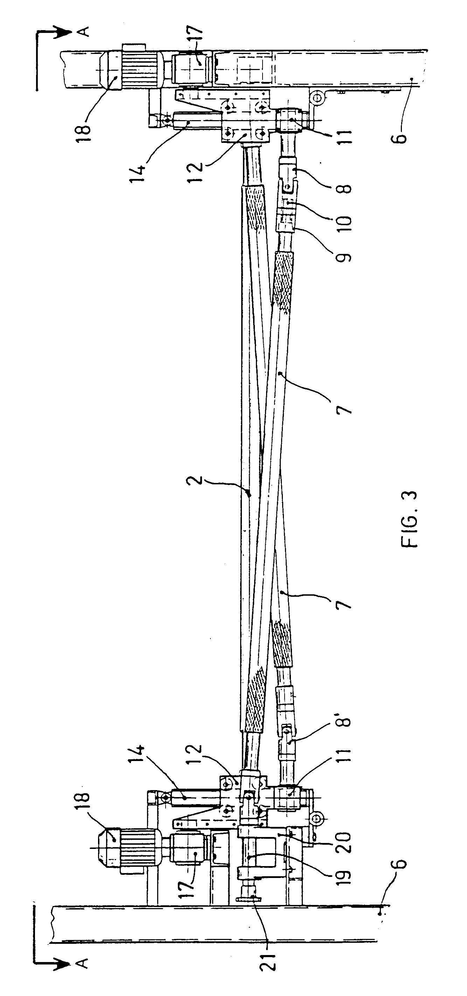

figure 3 is a front view of the bending rollers and the moving means for the same;

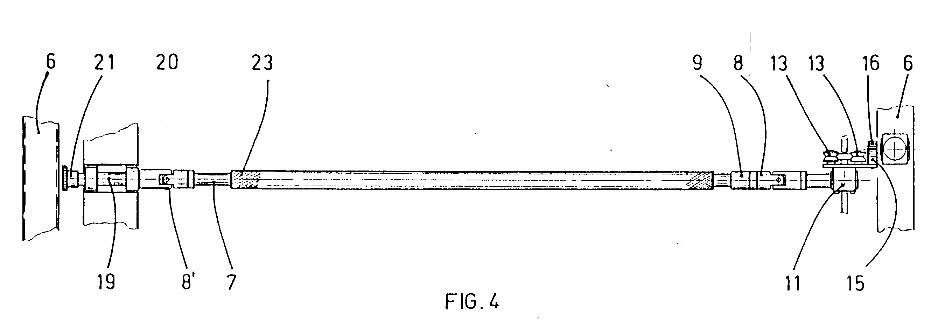

figure 4 is a top view, along the line A-A, of one of the mobile rollers of figure 3;
figure 5 is a view of the elements of the moving system for the mobile rollers; and
figure 6 shows the main steps of the bending of a sheet of glass according to the process of the present invention.

With reference to the figures from 1 to 6 and in accordance with the present invention a sheet of glass 1 is heated up to the deformation temperature in a horizontal oven, and then transported by means of rollers 2 to a bending station C.

In the bending station C two bending moulds having complementary surfaces are present, one in an upper position with respect to the plane of the conveyor rollers, hereinafter called "male" and indicated by 3, and the other in a lower position with respect to the conveyor rollers, hereinafter called "ring" and indicated by 4.

The ring 4 is supported by a planar member 5 capable of being lifted in such a way as to allow a frame 22 of the ring 4 to pass beyond the level of the horizontal rollers 2 until coming into contact with the male 3.

The planar member 5 rests in its turn on a table 26 commanded by an hydrodynamic lifting system, not shown in the drawings, which causes it to slide along the guides 27 in a vertical direction.

A metal frame 6 constituted of suitable tubular beams bears the shaping means 3 and 4.

In particular the male 3 is borne by a horizontal bar 24 supported by two racks 25 which can slide in a vertical direction in such a way as to adjust the height of the male 3 with respect to the plane of the rollers 2.

In register to the bending ring 4, and on the same horizontal plane as the conveyor rollers 2, are placed rollers 7, movable in such a way as to be inclined in the direction of their vertical plane but in an opposite direction one with respect to the other, and to descend through the segments of the bearing frame 22.

Both the conveyor rollers 2 and the mobile rollers 7 are covered, along the whole length which can come into contact with the sheet of glass, with a knitted sleeve 23 of insulating glass-fibers.

At the two extremities of the roller 7 two swivel joints 8 and 8′ give the roller the possibility of moving in a vertical plane.

To this end a sleeve 9 spans over a lubricated slot 10 in which one of the two extremities of the roller can slide and thus recover the play necessary for the inclination motion; a support 11, on the extremity where sleeve and slot are present, connects the roller 7 to a plate 12 provided with small wheels 13 which run on the rail 14.

A rack 15 is connected to the plate 12, and meshes with the pinion 16 which is moved by the reducer gearbox 17 and by the motor 18.

On the opposite extremity from that of the sliding plate 12, the roller 7 is connected to a shaft 19 hinged to a fixed support 20. A pinion 21 is driven by a chain transmission, not shown in the drawings, and transmits a rotatory motion to the roller 7.

In register to the ring 4 a suitable number of mobile rollers 7 are placed, inclinable in an opposed direction one with respect to the other in such a way as to create a cradle in which the sheet of glass rests.

In particular the rollers 7 perform a transport function when they are in a horizontal position, and a bending function when they are inclined.

In fact, when the sheet of glass 1 arrives in register with the ring 4, the rollers 7 stop, thanks to a system for detecting the position of the glass, not shown in the drawings, and the sheet of glass rests against the mechanical stops 28.

According to the present invention the rollers 7 incline in their vertical plane, but in an opposite direction one with respect to the other, in such a way as to pass down below the bearing frame 22 of the ring 4 and thus lay the sheet of glass on the ring 4.

In particular the motor 18 and the conductor 17, by means of the pinion 16 and the rack 15, cause the support 11 to move downwards and thus determine the inclination of the roller 7.

A similar movement takes place for the adjacent roller at the other extremity, thus causing the roller to incline downwards, but in the opposite direction.

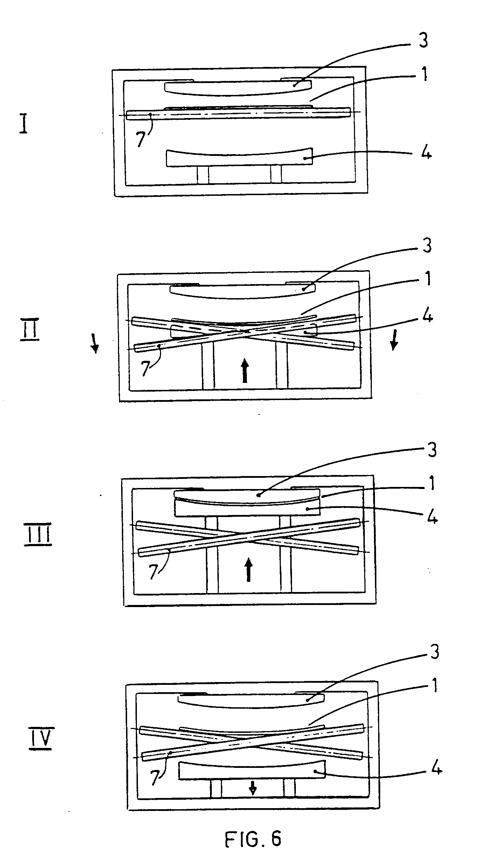

In figure 6 the various bending phases of the piece, carried out according to the present invention, are shown schematically.

The sheet of glass 1 reaches the rollers 7 and stops (I); the ring 4 rises until its bearing surface is immediately underneath the sheet of glass; the rollers 7 cross until bringing the sheet of glass 1 onto the ring 4 (II); the ring 4 carries the sheet of glass towards the male mould (III); the ring 4 descends below the crossed rollers 7, leaving the sheet of glass 1 on the rollers 7, which then start up again, removing the sheet from the bending area (IV).

This cycle commences once more with the rollers 7 returning to their horizontal position to collect the following sheet of glass which has to be bent.

Although a preferred embodiment has been described in detail, it is understood that certain changes may be made in the above construction, without departing from the scope of the claims.

## Claims

1. An apparatus for the bending of a sheet of glass, suitable for use as a window glass for a vehicle in general and for an automobile in particular, consisting essentially of conveyor means for the transport of the sheet of glass (1) heated up to its deformation temperature, along a horizontal transport plane, male (3) and female (4) bending moulds for pressure shaping, placed respectively at a higher and a lower level with respect to said transport plane, and supports (6) for said conveyor means, characterized in that said conveyor means comprise conveyor rollers (7) which, at least in the area between the male and female bending moulds, are connected to said supports by means of swivel joints (8, 8'), in such a way that said rollers can be inclined with respect to said transport plane, each conveyor roller has one end resting on a fixed support (20) and one end resting on a mobile support (11) capable of moving in the vertical direction, the sides of the conveyor rollers at which the fixed and the mobile supports are placed, are alternated for each subsequent roller to obtain, on lowering, a crossed configuration of said rollers, and the movement of each mobile support is controlled by a rack (15) which in turn is driven by a motor (18) and reducer (17) gearbox.

2. The apparatus according to claim 1, in which the inclination of each roller can be adjusted, by means of said motor, thus causing each roller to assume the inclination most suitable for the shaping of the glass to be obtained.

3. A process for the bending of a sheet of glass, suitable for use as window glass for a vehicle in general and for an automobile in particular, essentially consisting of heating a sheet (1) up to its deformation temperature in an oven provided with horizontal conveyor means, for transportation of the sheet of glass, and pressure bending said sheet between the complementary surfaces of upper and lower male (3) and female (4) moulds, the sheet of glass being placed on the female bending mould by means of horizontal conveyor rollers, located in the area between the bending moulds, and, after shaping, being placed on the horizontal conveyor rollers by lowering the female mould, characterized in that the sheet of glass (1) is placed on the female bending mould by means of the conveyor rollers (7) by lowering each roller at one of its sides, the lowered sides of the rollers alternating with each subsequent roller so as to get a crossed configuration of the rollers in a cross-sectional view, and that after shaping of the glass sheet between the male and the female moulds the shaped glass sheet is released onto the crossed conveyor rollers.

## Patentansprüche

1. Vorrichtung zum Biegen einer Glasscheibe, welche als Verglasung für ein Fahrzeug im allgemeinen, und für ein Automobil im einzelnen verwendet werden kann, im wesentlichen bestehend aus Transporteinrichtungen zum Transport der auf ihre Biegetemperatur erhitzteten Glasscheibe (1), entlang einer waagerechten Transportebene, patrizenartigen (3) und matrizenartigen (4) Biegeformen zum Preßformen, die sich jeweils in Bezug auf die Transportebene, auf einer höheren und einer tieferen Ebene befinden, und Trägern (6) für die Transporteinrichtungen, dadurch gekennzeichnet daß die Transporteinrichtungen Transportrollen (7) enthalten, die, zumindest in der Zone zwischen den patrizenartigen und matrizenartigen Biegeformen, durch Gelenkkupplungen (8,8') mit den Trägern verbunden sind, so daß die Rollen, in Bezug auf die Transportebene geneigt werden können, wobei ein Ende jeder Transportrolle auf einem festen Träger (20) aufliegt, und das andere Ende auf einem beweglichen Träger (11), in senkrechter Richtung beweglich aufliegt, wobei sich die Seiten der Transportrollen an denen sich die festen und die beweglichen Träger befinden, abwechseln, so daß beim Absenken, die aufeinander folgenden Rollen eine überkreuzte Stellung annehmen, und die Bewegung jedes beweglichen Trägers durch eine Zahnstange (15) kontrolliert wird, die ihrerseits von einem Motor (18) und einem Untersetzungsgetriebe (17) gesteuert wird.

2. Vorrichtung nach Anspruch 1, worin die Neigung jeder Rolle durch den Motor eingestellt werden kann, so daß jede Rolle die zum Formen des erhaltenden Glases geeigneste Neigung einnehmen kann.

3. Verfahren zum Biegen einer Glasscheibe, welche als Verglasung für ein Fahrzeug im allgemeinen, und für ein Automobil im einzelnen verwendet werden kann, das im wesentlichen auf dem Erhitzen einer Glasscheibe (1) bis auf ihre Biegetemperatur, in einem mit waagerechten Transporteinrichtungen zu deren Transport versehenen Ofen, dem Preßbiegen der Scheibe zwischen den Komplementäroberflächen der oberen und unteren patrizenartigen (3) und matrizenartigen (4) Formen, beruht, wobei die Glasscheibe durch die waagerechten Transporteinrichtungen die sich in der Zone zwischen den Biegeformen befinden, auf die matrizenartige Biegeform gebracht wird, und diese nach dem Pressen, durch das Senken der matrizenartigen Form auf die waagerechten Transportrollen abgelegt wird, dadurch gekennzeichnet, daß die Glasscheibe (1) durch die Transportrollen (7) auf die matrizenartige Biegeform gebracht wird, in dem jede Rolle an einer ihrer Seiten gesenkt wird, wobei sich die gesenkten Seiten der Rollen mit den darauf folgenden Rollen abwechseln, womit sich in einer Querschnittsansicht eine überkreuzte Anordnung der Rollen ergibt, und nach dem Formen der Glasscheibe zwischen der patrizen- und der matrizenartigen Biegeform, die geformte Glasscheibe auf die überkreuzten Transportrollen entladen wird.

## Revendications

1. Appareil pour plier une feuille de verre, apte à être utilisée pour la vitre d'un véhicule en général et d'une automobile en particulier, qui consiste essentiellement en des moyens transporteurs pour transporter la feuille de verre (1) chauffée à sa température de déformation, le long d'un plan de transport horizontal, des moules de pliage mâle (3) et femelle (4) pour façonnage à pression, placés respectivement à un niveau supérieur et inférieur par rapport au dit plan de transport, et des supports (6) pour les dits moyens transporteurs, caractérisé en ce que les dits moyens transporteurs comprennent des rouleaux transporteurs (7) qui, au moins dans la région entre les moules de pliage mâle et femelle, sont reliés aux dits supports au moyen de joints à rotule (8, 8'), de façon à ce que les dits rouleaux puissent être inclinés par rapport au dit plan de transport, chaque rouleau transporteur ayant une extrémité qui s'appuie sur un support fixe (20) et une extrémité qui s'appuie sur un support mobile (11) qui peut se mouvoir verticalement , les extrémités des dits rouleaux transporteurs où sont placés les supports fixes et mobiles, étant alternées pour chaque rouleau successif au fin d'obtenir, en les faisant baisser une configuration croisée des dits rouleaux, et le mouvement de chaque support mobile est contrôlé par une crémaillère (15) qui a son tour est entrainée par un moteur (18) et un réducteur (17).

2. Appareil selon la revendication 1, où l'inclinaison de chaque rouleau peut être réglée par le dit moteur, en faisant prendre à chaque rouleau l'inclinaison la plus apte à obtenir le pliage du verre.

3. Procédé pour plier une feuille de verre, apte à être utilisée pour la vitre d'un véhicule en général et d'une automobile en particulier, qui consiste essentiellement à chauffer une feuille (1) à sa température de déformation dans un four muni de moyens transporteurs horizontaux, pour le transport de la feuille de verre, et plier à pression la feuille entre les surfaces complémentaires d'un moule mâle supérieur (3) et d'un moule femelle inférieur (4), la feuille de verre étant placée sur le moule de pliage femelle au moyen de rouleaux transporteurs horizontaux, placés dans la region entre les moules de pliage, et, une fois pliée, étant disposée sur les rouleaux transporteurs horizontaux en faisant baisser le moule femelle, caractérisé en ce que la feuille de verre (1) est placée sur le moule de pliage femelle au moyen de rouleaux transporteurs (7) en faisant baisser chaque rouleau à l'une de ses extrémités les extrémités abaissées des rouleaux étant alternées pour chaque rouleau successif, de façon à ce qu'on obtienne une configuration croisée des rouleaux en section transversale et après le pliage de la feuille de verre entre les moules mâle et femelle, la feuille de verre façonnée est délivrée aux rouleaux transporteurs croisés.
